# FASCICULE DE BREVET EUROPEEN

(11) **EP 4 251 517 B1**
(45) Date de publication et mention de la délivrance du brevet: **07.05.2025**
(21) Numéro de dépôt: 21830319.6
(22) Date de dépôt: 25.11.2021
(51) Int. Cl.: B64G 1/00, B64G 1/40, B64G 1/62

(54) **SYSTEME DE TRANSPORT SPATIAL REUTILISABLE**
WIEDERVERWENDBARES RAUMTRANSPORTSYSTEM
REUSABLE SPACE TRANSPORTATION SYSTEM

(30) Priorité: 25.11.2020 FR 2012136
(43) Date de publication de la demande: 04.10.2023
(73) Titulaire: ArianeGroup SAS, 78130 Les Mureaux (FR)
(72) Inventeur: PRAMPOLINI, Marco, 33185 LE HAILLAN (FR); BOURGOING, Alexis, 33185 LE HAILLAN (FR)
(74) Mandataire: Cabinet Beau de Loménie
(86) Numéro de dépôt international: PCT/FR2021/052094
(87) Numéro de publication internationale: WO 2022/112718

(56) Documents cités:
- WO-A1-2010/141124
- WO-A1-98/13260
- WO-A2-2011/005422
- RU-C1- 2 053 168
- US-A1- 2010 314 487

## Description

### Domaine Technique

L'invention concerne un système de transport spatial réutilisable destiné à être installé sur un lanceur spatial.

### Technique antérieure

Les missions de lancement spatial sont généralement réalisées en installant un système de transport qui embarque une charge utile, par exemple un satellite à mettre en orbite, sur un lanceur spatial. Le système de transport forme ainsi le dernier étage du lanceur, les premiers étages étant des étages de propulsion qui sont détachés une fois leur mission effectuée.

Un problème généralement rencontré par les systèmes de transport connus est qu'ils ne peuvent être utilisés qu'une seule fois, c'est-à-dire pour un seul lancement et un seul atterrissage sur terre.

Afin de résoudre ce problème, un système de transport réutilisable, ou navette réutilisable, a été développé. Un système de transport réutilisable est capable d'atterrir à un endroit prédéterminé à la fin de sa mission afin de pouvoir récupérer le système de transport, et remettre le système de transport en état de fonctionnement pour une prochaine mission.

Une problématique rencontrée par les systèmes de transport réutilisables est d'être capable de contrôler avec une précision suffisante l'orientation et la vitesse du système de transport pour permettre au système de transport de revenir depuis l'espace pour atterrir à l'endroit désiré.

La solution de contrôle de l'orientation et de la vitesse du système de transport doit également être suffisamment robuste pour résister aux contraintes subies durant l'utilisation du système de transport, et permettre au système de transport d'être réutilisé pour une mission suivante.

Il est connu du document RU 2053168 une fusée de lancement réutilisable pour système de transport spatial pour mettre en œuvre une étape de lancement durant laquelle un dispositif de propulsion est éteint et des volets sont dans une position rétractée, une étape de retour durant laquelle les volets sont déployés et orientés pour assurer la stabilité et piloter la fusée, le dispositif de propulsion étant éteint et une étape d'atterrissage durant laquelle le dispositif de propulsion et les volets sont commandés pour ralentir et effectuer un retournement de la fusée et du document WO 2010/141124 un véhicule de lancement.

Selon un premier aspect, l'invention concerne un système de transport spatial destiné à être monté sur un lanceur spatial. Le système de transport comprend un fuselage s'étendant principalement selon une première direction, une première extrémité, une seconde extrémité opposée à la première extrémité selon la première direction, et un dispositif de propulsion ré-allumable situé sur ladite première extrémité ou sur ladite seconde extrémité.

Selon une caractéristique générale de l'invention, le système de transport comprend une pluralité de volets orientables situés à ladite seconde extrémité et une unité de contrôle. Chaque volet comprend un moyen d'actionnement configuré pour modifier l'orientation dudit volet au moins dans un plan comportant la première direction. Ladite unité de contrôle est configurée pour commander le dispositif de propulsion et commander individuellement chaque moyen d'actionnement pour contrôler l'orientation de chacun des volets afin de mettre en œuvre les étapes suivantes :
- une étape de lancement durant laquelle le dispositif de propulsion est éteint et les volets sont dans une position rétractée ;
- une étape de retour durant laquelle l'unité de contrôle commande les moyens d'actionnement pour déployer les volets et les orienter pour assurer la stabilité et piloter le système, le dispositif de propulsion étant éteint ;
- une étape d'atterrissage durant laquelle l'unité de contrôle commande le dispositif de propulsion et les moyens d'actionnement pour orienter les volets pour ralentir et effectuer un retournement du système de transport.

Un tel système de transport est notamment avantageux car il offre une solution simple et robuste pour un système de transport réutilisable, adapté à toutes les phases de mission du système de transport.

Le fuselage du système de transport possède un profil aérodynamique simple, c'est-à-dire sans voilure, qui permet de minimiser les contraintes de design du lanceur tout en maximisant le volume interne du système de transport spatial réutilisable puisqu'il n'y a pas besoin d'utiliser de coiffe externe aérodynamique.

Ce profil simple est similaire au profil de la coiffe d'une navette non réutilisable utilisée antérieurement. Ce profil permet ainsi d'avoir un système de transport qui puisse s'adapter sur les lanceurs actuels sans avoir besoin d'apporter quelque modification que ce soit au design des lanceurs connus et utilisés avec ce type de profil de navette.

Selon une caractéristique possible, les volets sont situés à distance du fuselage du système de transport quelle que soit l'étape. Les volets sont de préférence distants du fuselage selon la première direction dans l'étape de lancement. Les volets sont ainsi déportés par rapport à l'écoulement fluidique sur le fuselage.

La distanciation des volets par rapport au fuselage permet d'absorber la couche limite aérodynamique de liaison et ainsi de maximiser l'efficacité aérodynamique de la surface externe du système de transport quel que soit le régime de vitesse (et Mach) du système de transport.

Selon une caractéristique possible, les moyens d'actionnement des volets sont des actionneurs courbés. Ils peuvent décrire un mouvement selon une direction circulaire ou bien former une rotule permettant un pivotement supplémentaire dans deux plans distincts.

Selon une caractéristique possible, le système comprend quatre (3 ou plus) volets répartis selon une symétrie axiale autour de la première direction.

Selon une caractéristique possible, le dispositif de propulsion comprend une pluralité de tuyères d'éjection réparties sur le fuselage du système le long d'une direction circonférentielle autour de la première direction et qui sont dirigées vers la seconde extrémité du système et entre les volets ou selon une direction parallèle à la première direction et passant entre deux volets pour chaque tuyère d'éjection.

Selon une caractéristique possible, le dispositif de propulsion génère une poussée variable en intensité et en direction et contrôlée par l'unité de contrôle.

Selon une caractéristique possible, les volets présentent, selon la première direction et dans la configuration de l'étape de lancement, une longueur comprise entre 40% et 60% de la longueur du fuselage du système.

Des volets présentant un tel rapport de dimensions avec le système de transport permettent d'optimiser le contrôle de stabilité, de direction et de décélération du système de transport.

Selon une caractéristique possible, dans lequel chaque volet comprend une première extrémité dirigée vers la première extrémité du système lors de l'étape de lancement et une seconde extrémité dirigée vers la seconde extrémité du système lors de l'étape de lancement, et le système de transport est configuré pour reposer, à l'issue de l'étape d'atterrissage, sur une surface de référence, telle qu'une base d'atterrissage, par contact avec la seconde extrémité des volets pour accentuer la stabilité de pose à l'atterrissage.

Selon une caractéristique possible, le système comprend au moins un pied central situé à la seconde extrémité du système et entouré par les volets, le système de transport étant configuré pour reposer, à l'issue de l'étape d'atterrissage, sur la surface de référence via le pied central et via la seconde extrémité des volets qui permettent d'accentuer la stabilité au sol du système de transport. Les volets ne reprennent donc pas la majorité du poids, mais servent d'appui complémentaire comme des béquilles.

Selon un mode de réalisation de l'invention, le dispositif de propulsion est monté sur la première extrémité du fuselage. Cette configuration permet de maximiser le découplage entre le système de transport et le lanceur en phase de lancement, et, en phase de rentrée, de minimiser les interactions de jets avec les surfaces de contrôle aérodynamiques et le sol, de réduire les écoulements de gaz de recirculation chauds en phase d'atterrissage, et reculer le centre de gravité en phase de retournement final, pouvant ainsi aider à la manœuvre de retournement et à la stabilisation du système de transport en configuration posée au sol.

Selon un autre mode de réalisation, le dispositif de propulsion est monté sur la seconde extrémité du fuselage. Cette configuration permet d'éviter tout traitement particulier des tuyères par des opercules de protection des ambiances thermiques. En outre, elle permet, pour la phase de lancement, d'avoir une protection du dispositif de propulsion par l'interface mécanique entre le système de transport et le lanceur. En phase de rentrée, cette configuration permet d'éviter tout impact des jets propulsifs sur le fuselage ou sur la face extrados des volets aérodynamiques, de protéger le dispositif de propulsion des ambiances aérothermiques de rentrée, et de réaliser une ségrégation favorable entre les systèmes de bord.

Selon un deuxième aspect, l'invention concerne un ensemble comprenant un système selon l'une quelconque des caractéristiques précédentes installé sur un lanceur spatial.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement une vue en perspective d'un système de transport en vol selon un premier mode de réalisation avec les volets en positon rétractée pour l'étape de lancement.
[Fig. 2] La figure 2 représente schématiquement une vue en perspective du système de transport de la figure 1 en vol avec les volets en position semi-déployée pour l'étape d'entrée atmosphérique.
[Fig. 3] La figure 3 représente schématiquement une vue en perspective du système de transport de la figure 1 avec les volets en position déployée pour l'étape d'atterrissage.
[Fig. 4] La figure 4 représente schématiquement le système de transport de la figure 3 lorsqu'il est posé au sol après atterrissage.
[Fig. 5] La figure 5 représente schématiquement le système de transport de la figure 1 installé sur un lanceur spatial.
[Fig. 6] La figure 6 représente schématiquement une vue en perspective d'un système de transport en vol selon un second mode de réalisation avec les volets en positon rétractée pour l'étape de lancement.
[Fig. 7] La figure 7 représente schématiquement une vue en perspective du système de transport de la figure 6 en vol avec les volets en position semi-déployée pour l'étape d'entrée atmosphérique.
[Fig. 8] La figure 8 représente schématiquement une vue en perspective du système de transport de la figure 6 lorsqu'il est posé au sol après atterrissage.

### Description des modes de réalisation

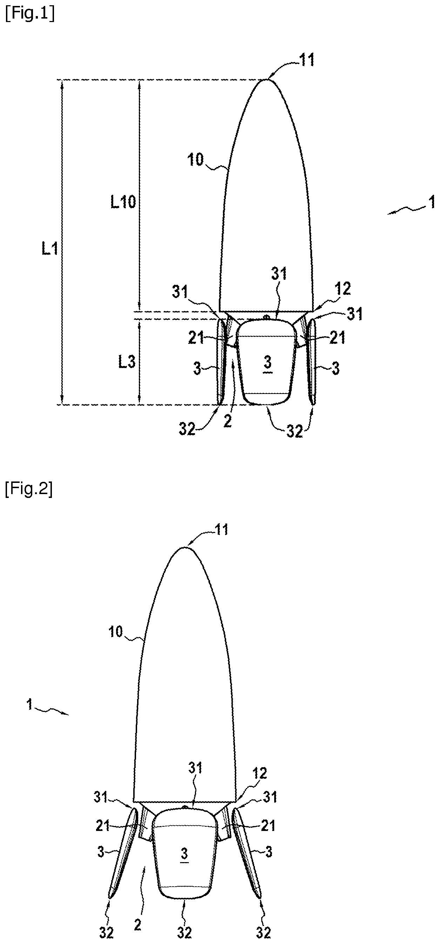

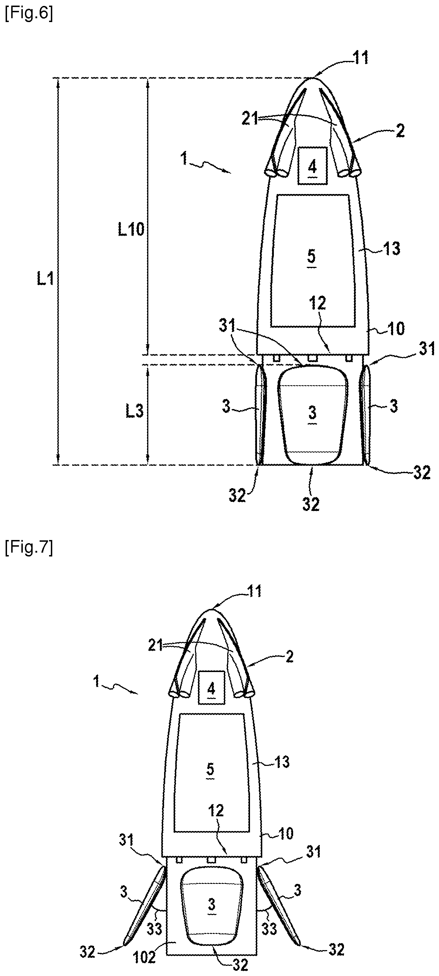

Comme cela est illustré sur les figures 1 à 8 illustrant deux modes de réalisation d'un système 1 de transport selon l'invention, un système 1 de transport comprend un dispositif de propulsion 2, une pluralité de volets 3 et un fuselage 10 s'étendant principalement selon une direction principale X entre une première extrémité 11 et une seconde extrémité 12 opposée à la première extrémité 11. La première extrémité 11 du fuselage 10 est considérée comme l'extrémité située à l'avant du système 1 de transport lorsqu'il est en vol, et la seconde extrémité 12 du fuselage 10 est considérée comme l'extrémité située à l'arrière du système 1 de transport lorsqu'il est en vol. Lorsque le système de transport 1 est monté sur un lanceur 100 comme cela est illustré sur la figure 6, la première extrémité 11 est libre à l'avant, et la seconde extrémité est en contact avec le lanceur 100.

Dans le mode de réalisation illustré sur les figures 1 à 5, le dispositif de propulsion 2 est situé sur la seconde extrémité 12. Dans un second mode de réalisation illustré notamment sur les figures 7 à 10, le dispositif de propulsion 2 peut être monté sur la première extrémité 11.

Dans les deux modes de réalisation illustrés sur les figures 1 à 5 et 6 à 8, les volets 3 sont couplés à la seconde extrémité 12 du fuselage 10 du système 1 de transport. Les volets 3 sont de forme essentiellement identique dans un plan de symétrie comprenant la direction principale et une direction orthogonale à la direction principale, lorsque les volets sont dans la configuration relative à l'étape de lancement définie ci-après.

Le fuselage 10 est profilé avec une section transversale essentiellement croissante dans le sens longitudinal. Le fuselage 10 peut ainsi par exemple donner une forme d'ogive au système 1 de transport dépourvue de voilure, la première extrémité 11 étant effilée.

Les volets 3 s'étendent selon la direction principale X entre une première extrémité 31 et une seconde extrémité 32 opposée à la première extrémité 31. La première extrémité 31 est disposée en regard de la seconde extrémité 12 du fuselage 10. Et, lorsque le système 1 de transport est en configuration relative à l'étape de lancement, la première extrémité 31 et la seconde extrémité 32 sont alignées selon une direction parallèle à la direction principale X.

Chaque volet 3 est fixé au fuselage 10 via un actionneur 33 formant une liaison articulée, dotée d'une rotule par exemple à son extrémité coopérant avec le volet 3, permettant de modifier l'orientation du volet 3 selon différentes directions.

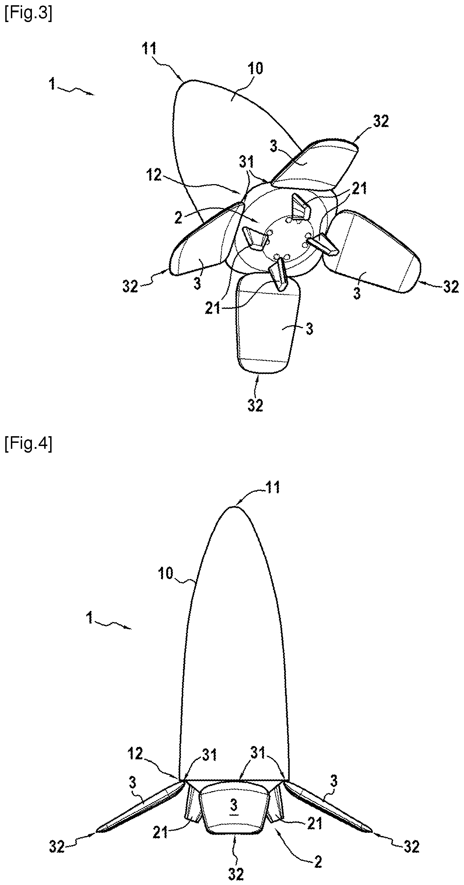

Grâce à l'actionneur 33, les volets 3 sont mobiles entre une position rétractée et une position déployée. La position rétractée est utilisée notamment durant l'étape de lancement et illustrée sur les figures 1 et 6, dans laquelle les volets 3 sont orientés pour être dans le prolongement du, ou parallèle au, fuselage 10 du système de transport 1 et offrir une résistance la plus faible possible, voire nulle, à l'écoulement fluidique s'écoulant sur le fuselage 10. La position déployée de butée, illustrée sur les figures 3, 4 et 8 est utilisée notamment durant l'étape d'atterrissage. Dans cette position lesdits volets 3 sont déployés et font saillie hors du profil du fuselage 10.

Les volets 3 ne sont pas limités à deux positions, et peuvent individuellement être dans n'importe quelles positions entre la position rétractée et la position déployée de butée, y compris selon des degrés de libertés complexes. Les figures 2 et 7 illustrent notamment schématiquement le système de transport 1 avec les volets 3 dans une position semi-déployée pour une étape de réentrée atmosphérique.

L'actionneur 33 est ainsi configuré pour déporter le volet 3 par rapport au fuselage 10 quelle que soit l'étape dans laquelle se trouve le système de transport 1. L'actionneur 33 permet ainsi de déporter le volet 3 par rapport au fuselage 10 à tout moment selon la direction principale X et/ou selon une direction contenue dans un plan orthogonale à la direction principale X.

Dans l'étape de lancement, les volets 3 peuvent ainsi être disposés dans la prolongement principale X d'un espace séparant la première extrémité 31 de chaque volet 3 de la seconde extrémité 12 du fuselage 10 comme cela est illustré sur la figure 1 pour le premier mode de réalisation et sur la figure 6 pour le second mode de réalisation.

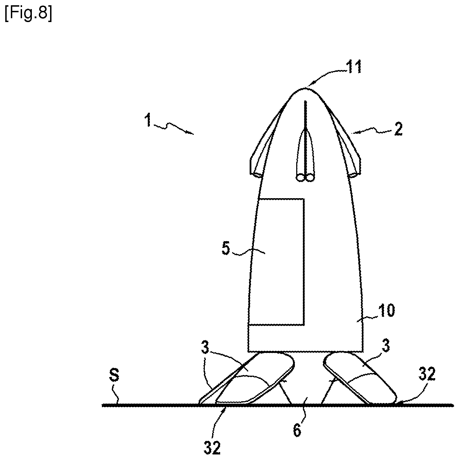

Comme cela est illustré sur la figure 8 illustrant le système de transport 1 selon le second mode de réalisation dans une configuration relative à l'étape d'atterrissage, l'actionneur 33 peut comprendre un bras mécanique arrondi permettant de faire pivoter le volet entre sa position rétractée et sa position déployée. Il peut comprendre une rotule également placée entre le bras mécanique courbe et le volet 3 qui permet de modifier l'orientation du volet 3 par rapport au bras mécanique.

La première extrémité 31 des volets 3 est donc déconnectée du fuselage 10 et située à distance dudit fuselage 10 du système 1 de transport ce qui permet d'adopter les degrés de libertés complexes de braquage des volets 3 selon les besoins liés à la mécanique du vol, de garantir un fonctionnement optimal des volets 3 sur toutes les phases de vol rencontrées au cours de la rentrée atmosphérique et de limiter les interactions entre les volets 3 et le fuselage 10 comme cela est illustré sur les figures 2 et 7 notamment.

Dans les deux modes de réalisation illustrés sur les figures 1 à 8, le système 1 comprend quatre volets 3 identiques qui sont répartis de façon homogène autour de la direction principale X. Le nombre de volets 3 peut varier selon les modes de réalisation mais est au moins égal à trois.

Le système 1 de transport comprend également une unité de contrôle 4 qui est configurée, d'une part, pour contrôler le dispositif de propulsion 2, et plus particulièrement l'activation du dispositif de propulsion 2, et, d'autre part, pour contrôler l'orientation de chaque volet 3 de manière individuelle en commandant les actionneurs 33. L'unité de contrôle 4 commande ainsi l'allumage du dispositif de propulsion 2 et l'orientation des volets 3 afin de contrôler la vitesse, l'orientation, et la trajectoire du système 1 de transport afin de mettre un œuvre un scénario prédéterminé qui est fonction de la mission que doit réaliser ledit système 1 de transport. L'unité de contrôle 4 permet ainsi au système 1 de transport d'effectuer un retournement lors de sa redescente sur Terre juste avant l'atterrissage. L'unité de contrôle 4 peut également procéder à une gestion du ralentissement et/ou de l'accélération du système 1 selon les besoins de la mission. L'unité de contrôle 4 permet également de guider le système 1 de transport vers la zone d'atterrissage désirée.

L'unité de contrôle 4 est notamment configurée pour mettre en œuvre une étape de lancement, puis une étape de retour depuis l'espace, puis une étape d'atterrissage.

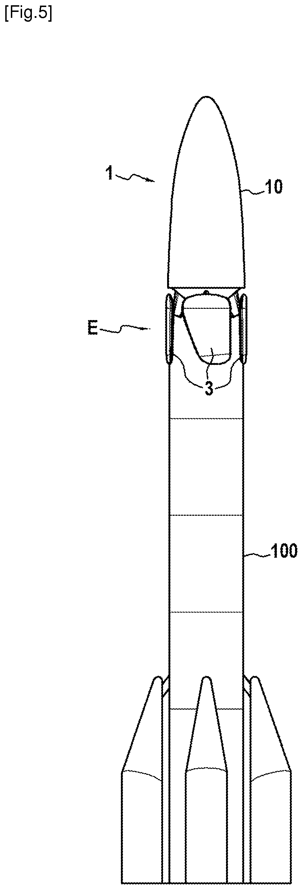

Durant l'étape de lancement, le système 1 de transport est installé sur un lanceur spatial 100 comme cela est illustré sur la figure 5, le dispositif de propulsion 2 est éteint et les volets 3 sont dans leur positon rétractée afin de limiter l'encombrement du système 1 de transport et les interactions sur le lanceur 100.

Durant l'étape de retour, le système 1 de transport revient sur Terre afin de pouvoir être récupéré. Durant l'étape de retour, l'unité de contrôle 4 commande les actionneurs 33 afin de déployer les volets 3 dans une position permettant d'assurer la stabilité, le ralentissement, et le pilotage du système 1 dans sa chute vers la Terre, comme cela est illustré sur les figures 2 et 7, le dispositif de propulsion 2 étant éteint. Lors de cette étape, le déploiement des volets 3 par l'unité de contrôle 4 via les actionneurs 33 permet de réaliser un ralentissement par dissipation aérodynamique de l'énergie cinétique dans l'atmosphère terrestre. En outre, l'unité de contrôle 4 peut adapter l'orientation de chaque volet 3 individuellement afin d'adapter la trajectoire du système 1 pour rectifier les éventuelles déviations qui peuvent survenir.

Durant l'étape d'atterrissage, le système 1 réalise une manœuvre de retournement et continue de ralentir afin de s'immobiliser sur le sol. Afin de réaliser le retournement du système 1, l'unité de commande 4 active le dispositif de propulsion 2 et adapte l'orientation des volets 3 à l'aide des actionneurs 33. En outre, une fois le système 1 retourné, c'est-à-dire lorsque la seconde extrémité 12 du fuselage 10 du système 1 est dirigée vers le sol, l'unité de commande 4 active le dispositif de propulsion 2 afin de ralentir le système 1, notamment pour placer les volets 3 dans une position rétractée en butée comme cela est illustré sur les figures 3 et 4 pour le premier mode de réalisation et sur la figure 8 pour le second mode de réalisation.

Les actionneurs 33 peuvent être actionnés pour avoir des positions dissymétriques des volets 3, notamment pour la phase de retournement. Les volets 3 sont contrôlés indépendamment les uns des autres pour permettre un tel retournement chacun présentant des angles différents, contrairement à la position de lancement et la position d'atterrissage dans lesquelles les volets 3 sont positionnés de manière symétrique par rapport l'axe principale X.

Dans les deux modes de réalisation illustrés sur les figures 1 à 8, les volets 3 peuvent présenter une longueur L3 qui est comprise entre 20% et 40% de la longueur L1 du système 1 lorsque les volets 3 sont en position rétractée dans le prolongement du fuselage 10 du système 1. Autrement dit, en position rétractée, la longueur L3 des volets 3 mesurée selon la direction principale X peut est comprise entre 40% et 60% de la longueur L10 du fuselage 10, et de préférence environ de 50% la longueur L10 du fuselage 10, comme cela est illustré sur les figures 1 et 6.

Le système 1 de transport comprend une capacité d'emport d'une charge utile. La charge utile peut par exemple comprendre un ou plusieurs satellites artificiels à mettre en orbite. La charge utile peut également comprendre des passagers et tous les systèmes d'avortement et de sauvegarde de mission requis pour le transport de passagers, ainsi que les systèmes de support vie dans l'espace. Le système 1 de transport peut notamment embarquer à la fois un ou plusieurs satellites et des passagers.

Dans les deux modes de réalisation, le système 1 de transport peut comprendre une trappe 5 située sur une zone centrale 13 du fuselage 10 située entre la première extrémité 11 et la seconde extrémité 12, comme cela est illustré sur les figures 6 à 8,ladite trappe 5 étant mobile entre une position ouverte dans laquelle un espace cargo est accessible, et une positon fermée dans laquelle l'espace cargo est fermé. La trappe 5 permet d'embarquer la charge utile, de la protéger durant son transport, puis la trappe 5 peut s'ouvrir lorsque la charge utile doit être libérée.

Ainsi, selon une mise en œuvre possible, lorsqu'un satellite est chargé dans l'espace cargo situé dans la zone centrale 13 et qui est fermé par la trappe 5, la trappe 5 peut s'ouvrir lorsque le système 1 de transport a atteint l'orbite de transfert dudit satellite afin de mettre à poste le satellite, le satellite pouvant ensuite par exemple utiliser son moteur d'apogée afin de se déplacer jusqu'à son orbite de travail. Une fois le satellite mis à poste, l'unité de contrôle 4 commande le dispositif de propulsion 2 et les volets 3 afin d'assurer un retour sur Terre du système 1 et afin d'effectuer les manœuvres pour un atterrissage sur la zone d'atterrissage désirée.

Selon une autre mise en œuvre possible, la trappe 5 n'est ouverte que pour l'embarquement et le débarquement des passagers avant le décollage et après l'atterrissage et pendant les phases de vol orbital.

De manière préférentielle, le dispositif de propulsion 2 génère une poussée qui est variable, de sorte que l'unité de commande 4 peut adapter la quantité de poussée générée par le dispositif de propulsion 2 lorsque le dispositif de propulsion 2 est activé par ladite unité de commande 4.

Le dispositif de propulsion 2 peut par exemple être un moteur fusé à ergols liquide ou hybride.

Dans le premier mode de réalisation illustré sur les figures 1 à 5, le dispositif de propulsion 2 du système de transport 1 est disposé sur la seconde extrémité 12 du fuselage 10. Dans ce premier mode de réalisation, le dispositif de propulsion 2 comprend quatre tuyères déjection 21 placées sur le fond du système de transport 1. Les tuyères d'éjection 21 sont ainsi disposées dans un espace compris entre les volets 3 lorsqu'ils sont en position rétractée.

Dans le second mode de réalisation illustré sur les figures 6 à 8, le dispositif de propulsion 2 comprend une pluralité de tuyères d'éjection 21 qui sont réparties sur le contour du fuselage 10 du système 1 de transport au niveau de la première extrémité 11, et plus particulièrement sur la surface externe du fuselage 10. Les tuyères d'éjection 21 sont dirigées vers la seconde extrémité 12 du fuselage 10 du système 1 et sont situées chacun selon un axe parallèle la direction principale X et passant entre deux volets 3. Ainsi, les volets 3 ne sont pas atteints par le flux d'éjection sortant du dispositif de propulsion 2.

Comme cela est illustré sur la figure 8, à l'issue de l'atterrissage, les volets 3 peuvent servir de support complémentaire assurant un incrément de stabilité de pose à d'atterrissage pour le système 1 de transport. Ainsi, les volets 3 peuvent être dans une position d'atterrissage dans laquelle tous les volets 3 sont dans leur la position déployée de butée, le système 1 reposant sur une surface de référence S, généralement le sol, par la seconde extrémité 32 des volets 3.

Le système 1 peut en outre comprendre au moins un pied central 6 situé entre les volets 3 au niveau de la seconde extrémité 12 comme cela est illustré sur la figure 8. La forme du (ou des) pied(s) central (centraux) 6 est adaptée pour que le système 1 repose sur la surface de référence S à la fois par la seconde extrémité 32 des volets 3 et par le(s) pied(s) central (centraux) 6 lorsque les volets 3 sont en position d'atterrissage.

Comme cela est illustré sur la figure 5, le système de transport 1 peut être installé sur le lanceur spatial 100 afin de former un ensemble E.

Sur les figures 6 et 7 est visible une portion 102 d'un des carter du lanceur spatial 100, ce carter étant destiné à être décroché du système 1 de transport à l'issue du lancement.

L'invention permet ainsi de fournir un système de transport réutilisable capable de contrôler avec une précision suffisante son orientation et sa vitesse pour lui permettre de revenir depuis l'espace pour atterrir à l'endroit désiré, et suffisamment robuste pour résister aux contraintes subies durant le vol.

## Revendications

1. Système (1) de transport spatial destiné à embarquer une charge utile et être monté sur un lanceur spatial (100), le système (1) de transport comprenant un fuselage (10) s'étendant principalement selon une première direction, une première extrémité (11), une seconde extrémité (12) opposée à la première extrémité (11) selon la première direction, et un dispositif de propulsion (2) ré-allumable situé sur ladite première extrémité (11) ou sur ladite seconde extrémité (12),
le système (1) de transport comprenant une pluralité de volets (3) orientables situés à ladite seconde extrémité (12) et une unité de contrôle (4), chaque volet (3) comprenant un moyen d'actionnement configuré pour modifier l'orientation dudit volet (3) au moins dans un plan parallèle à la première direction, et ladite unité de contrôle (4) étant configurée pour commander le dispositif de propulsion (2) et commander individuellement chaque moyen d'actionnement pour contrôler l'orientation de chacun des volets (3) afin de mettre en œuvre les étapes suivantes :
- une étape de lancement durant laquelle le dispositif de propulsion (2) est éteint et les volets (3) sont dans une position rétractée ;
- une étape de retour depuis l'espace durant laquelle l'unité de contrôle (4) commande les moyens d'actionnement pour déployer les volets (3) et les orienter pour assurer la stabilité et piloter le système (1) de transport, le dispositif de propulsion (2) étant éteint ;
- une étape d'atterrissage durant laquelle l'unité de contrôle (4) commande le dispositif de propulsion (2) et les moyens d'actionnement pour orienter les volets (3) pour ralentir et effectuer un retournement du système (1) de transport.

2. Système (1) selon la revendication 1, dans lequel les volets (3) sont situés à distance du fuselage (10) du système (1) de transport quelle que soit l'étape, les volets (3) étant distant du fuselage (10) selon la première direction dans l'étape de lancement.

3. Système (1) selon l'une quelconque des revendications 1 ou 2, dans lequel les moyens d'actionnement des volets (3) sont des actionneurs (33) configurés pour maintenir les volets déportés du fuselage (10).

4. Système (1) selon l'une quelconque des revendications 1 à 3, dans lequel le système (1) comprend quatre volets (3) répartis selon une symétrie axiale autour de la première direction.

5. Système (1) selon l'une quelconque des revendications 1 à 4, dans lequel le dispositif de propulsion (2) comprend une pluralité de tuyères d'éjection (21) réparties sur le fuselage (10) du système (1) le long d'une direction circonférentielle autour de la première direction et qui sont dirigées vers la seconde extrémité (12) du système (1) et entre les volets (3) ou selon une direction parallèle à la première direction et passant entre deux volets (3) pour chaque tuyère d'éjection.

6. Système (1) selon l'une quelconque des revendications 1 à 5, dans lequel le dispositif de propulsion (2) génère une poussée variable en intensité et en direction contrôlée par l'unité de contrôle (4).

7. Système (1) selon l'une quelconque des revendications 1 à 6, dans lequel, selon la première direction et dans la configuration de l'étape de lancement, les volets (3) présentent une longueur (L3) comprise entre 40% et 60% de la longueur (L10) du fuselage (10) du système (1) de transport.

8. Système (1) selon l'une quelconque des revendications 1 à 7, dans lequel chaque volet (3) comprend une première extrémité (31) dirigée vers la première extrémité (11) du système (1) lors de l'étape de lancement et une seconde extrémité (32) dirigée vers la seconde extrémité (12) du système (1) lors de l'étape de lancement, et le système (1) est configuré pour reposer sur une surface de référence (S) par contact avec la seconde extrémité (32) des volets (3) à l'issue de l'étape d'atterrissage.

9. Système (1) selon la revendication 8, dans lequel le système (1) comprend au moins un pied central (6) situé à la seconde extrémité (12) du système (1) et entouré par les volets (3), le système (1) étant configuré pour reposer sur la surface de référence (S) par contact avec la seconde extrémité (32) des volets (3) et le pied central (6) à l'issue de l'étape d'atterrissage.

10. Ensemble (E) comprenant un système (1) de transport selon l'une quelconque des revendications 1 à 9 installé sur un lanceur spatial (100).

## Patentansprüche

1. Raumtransportsystem (1), das dazu bestimmt ist, eine Nutzlast an Bord zu nehmen und an einer Trägerrakete (100) montiert zu werden, das Transportsystem (1) umfassend einen Rumpf (10), der sich hauptsächlich in einer ersten Richtung erstreckt, ein erstes Ende (11), ein zweites Ende (12) gegenüber dem ersten Ende (11) in der ersten Richtung, und eine erneut zündbare Antriebsvorrichtung (2), die sich an dem ersten Ende (11) oder an dem zweiten Ende (12) befindet,
das Transportsystem (1) umfassend eine Vielzahl von ausrichtbaren Klappen (3), die sich an dem zweiten Ende (12) befinden, und eine Steuereinheit (4), jede Klappe (3) umfassend eine Betätigungseinrichtung, die konfiguriert ist, um die die Ausrichtung der Klappe (3) zumindest in einer Ebene parallel zu der ersten Richtung zu ändern, und wobei die Steuereinheit (4) konfiguriert ist, um die Antriebsvorrichtung (2) zu steuern und jede Betätigungseinrichtung einzeln zu steuern, um die Ausrichtung jeder der Klappen (3) zu steuern, um die folgenden Phasen durchzuführen:
- eine Startphase, bei der die Antriebsvorrichtung (2) ausgeschaltet ist und die Klappen (3) in einer eingefahrenen Position sind;
- eine Rückkehrphase aus dem Weltraum, bei der die Steuereinheit (4) die Betätigungseinrichtung steuert, um die Klappen (3) auszufahren und sie auszurichten, um die Stabilität zu gewährleisten und das Transportsystem (1) zu steuern, wobei die Antriebsvorrichtung (2) ausgeschaltet ist;
- eine Landephase, bei der die Steuereinheit (4) die Antriebsvorrichtung (2) und die Betätigungseinrichtung steuert, um die Klappen (3) auszurichten, um eine Rückkehr des Transportsystems (1) zu verlangsamen und durchzuführen.

2. System (1) nach Anspruch 1, wobei sich die Klappen (3) unabhängig von der Phase in einem Abstand von dem Rumpf (10) des Transportsystems (1) befinden, wobei die Klappen (3) in der Startphase in der ersten Richtung von dem Rumpf (10) entfernt sind.

3. System (1) nach einem der Ansprüche 1 oder 2, wobei die Betätigungseinrichtungen der Klappen (3) Aktuatoren (33) sind, die konfiguriert sind, um die Klappen weg von dem Rumpf (10) zu halten.

4. System (1) nach einem der Ansprüche 1 bis 3, wobei das System (1) vier Klappen (3) umfasst, die axialsymmetrisch um die erste Richtung verteilt sind.

5. System (1) nach einem der Ansprüche 1 bis 4, wobei die Antriebsvorrichtung (2) eine Vielzahl von Ausstoßdüsen (21) umfasst, die über den Rumpf (10) des Systems (1) entlang einer Umfangsrichtung um die erste Richtung verteilt sind und die auf das zweite Ende (12) des Systems (1) und zwischen den Klappen (3) oder entlang einer Richtung parallel zu der ersten Richtung und zwischen zwei Klappen (3) für jede Ausstoßdüse verlaufend gerichtet sind.

6. System (1) nach einem der Ansprüche 1 bis 5, wobei die Antriebsvorrichtung (2) einen Schub erzeugt, dessen Intensität und Richtung variabel sind und von der Steuereinheit (4) gesteuert wird.

7. System (1) nach einem der Ansprüche 1 bis 6, wobei die Klappen (3) in der ersten Richtung und in der Konfiguration der Startphase eine Länge (L3) aufweisen, die zwischen 40 % und 60 % der Länge (L10) des Rumpfs (10) des Transportsystems (1) ist.

8. System (1) nach einem der Ansprüche 1 bis 7, wobei jede Klappe (3) ein erstes Ende (31), das während der Startphase zu dem ersten Ende (11) des Systems (1) gerichtet ist, und ein zweites Ende (32), das während der Startphase zu dem zweiten Ende (12) des Systems (1) gerichtet ist, umfasst, und das System (1) konfiguriert, um durch Kontakt mit dem zweiten Ende (32) der Klappen (3) am Ende der Landephase auf einer Bezugsfläche (S) zu ruhen.

9. System (1) nach Anspruch 8, wobei das System (1) mindestens einen mittleren Fuß (6) umfasst, der sich an dem zweiten Ende (12) des Systems (1) befindet und von den Klappen (3) umgeben ist, wobei das System (1) konfiguriert ist, um durch Kontakt mit dem zweiten Ende (32) der Klappen (3) und dem mittleren Fuß (6) am Ende der Landephase auf der Bezugsfläche (S) zu ruhen.

10. Anordnung (E), umfassend ein Transportsystem (1) nach einem der Ansprüche 1 bis 9, das auf einer Trägerrakete (100) installiert ist.

## Claims

1. A space transportation system (1) intended to embark a payload and be mounted on a space launcher (100), the transportation system (1) comprising a fuselage (10) extending mainly along a first direction, a first end (11), a second end (12) opposite to the first end (11) along the first direction, and a re-ignitable propulsion device (2) located on said first end (11) or on said second end (12), the transportation system (1) comprising a plurality of steerable flaps (3) located at said second end (12) and a monitoring unit (4), each flap (3) comprising an actuating means configured to modify the orientation of said flap (3) at least in a plane parallel to the first direction, and said monitoring unit (4) being configured to control the propulsion device (2) and individually control each actuating means to monitor the orientation of each of the flaps (3) in order to implement the following steps:
- a launch step during which the propulsion device (2) is off and the flaps (3) are in a retracted position;
- a return from space step during which the monitoring unit (4) controls the actuating means to deploy the flaps (3) and orient them to ensure the stability and pilot the transportation system (1), the propulsion device (2) being off;
- a landing step during which the monitoring unit (4) controls the propulsion device (2) and the actuating means to orient the flaps (3) to slow down and perform a rollover of the transportation system (1).

2. The system (1) according to claim 1, wherein the flaps (3) are located at a distance from the fuselage (10) of the transportation system (1) whatever the step, the flaps (3) being remote from the fuselage (10) along the first direction in the launch step.

3. The system (1) according to any one of claims 1 or 2, wherein the means for actuating the flaps (3) are actuators (33) configured to maintain the flaps offset from the fuselage (10).

4. The system (1) according to any one of claims 1 to 3, wherein the system (1) comprises four flaps (3) distributed according to an axial symmetry around the first direction.

5. The system (1) according to any one of claims 1 to 4, wherein the propulsion device (2) comprises a plurality of exhaust nozzles (21) distributed on the fuselage (10) of the system (1) along a circumferential direction around the first direction and which are directed towards the second end (12) of the system (1) and between the flaps (3) or along a direction parallel to the first direction and passing between two flaps (3) for each exhaust nozzle.

6. The system (1) according to any one of claims 1 to 5, wherein the propulsion device (2) generates a thrust that is variable in terms of intensity and direction and monitored by the monitoring unit (4).

7. The system (1) according to any one of claims 1 to 6, wherein the flaps (3) have, along the first direction and in the configuration of the launch step, a length (L3) comprised between 40% and 60% of the length (L10) of the fuselage (10) of the transportation system (1).

8. The system (1) according to any one of claims 1 to 7, wherein each flap (3) comprises a first end (31) directed towards the first end (11) of the system (1) during the launch step and a second end (32) directed towards the second end (12) of the system (1) during the launch step, and the system (1) is configured to rest on a reference surface (S) by contact with the second end (32) of the flaps (3) at the end of the landing step.

9. The system (1) according to claim 8, wherein the system (1) comprises at least one central leg (6) located at the second end (12) of the system (1) and surrounded by the flaps (3), the system (1) being configured to rest on the reference surface (S) by contact with the second end (32) of the flaps (3) and the central leg (6) at the end of the landing step.

10. An assembly (E) comprising a transportation system (1) according to any one of claims 1 to 9 installed on a space launcher (100).
